# EUROPÄISCHE PATENTANMELDUNG

(11) **EP 2 202 348 A2**
(43) Veröffentlichungstag der Anmeldung: **30.06.2010**
(21) Anmeldenummer: 09178137.7
(22) Anmeldetag: 07.12.2009
(51) Int. Cl.: D06F 58/22

(54) **Hausgerätesieb, Hausgerät mit einem solchen Sieb und Verfahren zum Herstellen eines solchen Siebs**

(30) Priorität: 22.12.2008 DE 102008055093
(71) Anmelder: BSH Bosch und Siemens Hausgeräte GmbH, 81739 München (DE)
(72) Erfinder: Grunert, Klaus, 13465 Berlin (DE)

(57) **Zusammenfassung**

Die Erfindung bezieht sich auf ein Hausgerätesieb 1 aus einem Siebgrundmaterial (10) mit einer hydrophoben Beschichtung (11) zum Heraussieben von Körpern (F), insbesondere Flusen, aus einem Prozesswasserkanal oder einem Prozessluftkanal (3), wobei das Siebgrundmaterial (10) aus einem Material besteht, das Siebgrundmaterial (10) aus einem Material besteht, das bei Temperaturen von 160 °C oder mehr beständig ist.. Das hochtemperaturbeständige Material ist bevorzugt beständig bei Temperaturen von mehr als 200°C und bei einer Temperatureinwirkung mit einer Dauer von 90 oder mehr Minuten, um eine besonders gut geeignete hydrophobe Beschichtung zu erzielen.

## Beschreibung

Die Erfindung betrifft ein Hausgerätesieb, ein Hausgerät mit einem solchen Sieb und ein Verfahren zum Herstellen eines solchen Siebs.

Allgemein bekannt sind Hausgeräte wie Waschmaschinen, Wäschetrockner, kombinierte Waschtrockner oder Geschirrspülmaschinen. Bei derartigen Hausgeräten ist der Einsatz von Sieben zur Reinigung eines Prozessmediums bekannt. Beispielsweise ist in Wäschetrocknern in einem vom Trommelgehäuse wegführenden Prozessluftkanal ein derartiges Sieb angeordnet. Wenn in einer Wäschetrommel innerhalb des Trommelgehäuses Wäsche getrocknet wird, werden von der Wäsche mit der Prozessluft als dem Prozessmedium Körper, insbesondere Flusen, weggeführt und mit der Prozessluft in dem Prozessluftkanal mitgeschleppt. Das Sieb dient dazu, solche Flusen aus der Prozessluft herauszusieben, so dass die Flusen nicht bis in einen Kondensator, eine Heizeinrichtung oder ein nachgeschaltetes Gebläse gelangen können. Derartige Siebe können typischerweise über einen Zugang von außerhalb des Hausgerätes her entnommen und nach Entnahme gereinigt werden, um am Sieb anhaftende Flusen wieder zu entfernen. Bei Waschmaschinen oder Geschirrspülmaschinen sind Siebe beispielsweise in einem Abwasserauslass bekannt.

Damit Anhaftkraftkräfte der Flusen am Siebgewebe des Siebs reduziert werden, wird das Siebgewebe vorteilhaft mit einer hydrophoben Beschichtung versehen. Die in Wäschetrocknern üblicherweise verwendeten Flusensiebe bestehen aus einem KunststoffGewebe, welches zur hydrophoben Beschichtung mit einer Beschichtung versehen wird. Die Beschichtung wird bei einer Temperatur von ca. 160°C über eine Zeitdauer von 1,5 Minuten fixiert. Diese niedrige Temperatur und die kurze Fixierzeit sind erforderlich, um ein Beschädigen des Kunststoff-Gewebes durch zu starke Wärmeeinwirkung zu verhindern, da der Kunststoff auch schon bei 160°C nicht dauerhaft beständig ist. Nachteilig an der niedrigen Temperatur und der kurzen Fixierzeit ist, dass die Anhaftkräfte von Fremdkörpern am Siebgewebe des Siebs nicht ausreichend abgesenkt werden können, was eine Abreinigung der Fremdkörper mittels einer Reinigungsflüssigkeit erschwert.

US 2005/0252022 A1 beschreibt einen eigenständigen Flusenfänger zum Einfangen von Luftteilchen, welcher einen Lufteinlass umfasst, um es den Luftteilchen zu ermöglichen, in den Flusenfänger einzutreten, und einen Boden, der eine Neigung aufweist zur Erhöhung der Geschwindigkeit der Luftteilchen und zur Eingrenzung durch eine Zentrifugalkraft. Der Lufteinlass ist mit einem Trockner verbunden. Der Boden kann eine Antihaftbeschichtung aufweisen. Der Boden kann aus Aluminium bestehen. Dieser Flusenfänger weist den Nachteil auf, dass er als ein separates Gerät erheblichen Stellplatz verbraucht. Außerdem reinigt der Flusenfänger nur Abluft von dem Trockner, um die Abluft auch in einen Innenraum eines Hauses leiten zu können. Eine Reinigung der Prozessluft in einem Trockner ist hingegen nicht vorgesehen.

WO 2008/077394 A2 betrifft eine strukturierte Materialbahn, insbesondere Metallbahn, zur Trennung eines Fluids von Feststoffen mit einer mehrdimensionalen Strukturierung, die Wülste oder Falten sowie nebeneinander angeordnete und jeweils in einem von den Wülsten oder den Falten eingeschlossenen Flächeabschnitt gebildete Strukturen aufweist, wobei jede der Strukturen einen ausgezeichneten Ort mit einem Loch aufweist und der Flächenabschnitte in jedem anderen Ort der Struktur mit einer Neigung zu dem ausgezeichneten Ort hin gebildet ist. Die Materialbahn kann aus einem Maschengitter, einem Gewebe oder einem Textil ausgebildet sein. Die Materialbahn kann eine Antihaftbeschichtung auf ihrer Oberfläche oder eine Antihaftoberfläche, insbesondere nach dem LotusEffekt, aufweisen. Die Materialbahn kann aus einem Maschengitter oder Gewebe bzw. Textil bestehen. Die Materialbahn kann aus der folgenden Gruppe der Materialien: Metall- , Kunststoff-, Natur-, Carbon-, Glasfasern sowie Pappe und Papier, einem Maschengitter, z.B. aus Edelstahl, oder Gewebe bestehen. Die Materialbahn kann für eine Trommel einer Wäschebehandlungsmaschine verwendet werden oder auch für eine Siebwand. Jedoch wird nirgends eine Verwendung mit einem mit einer Flüssigkeit abreinigbaren Flusensieb in einem Prozessluftkreislauf offenbart noch eine für diesen Zweck konkrete Ausgestaltung einer Antihaftbeschichtung. Diese ist vielmehr bei einer Anwendung der Materialbahn zum gleichmäßigen Verteilen oder Dosieren von fluiden Mengen vorgesehen, um, Flüssigkeitströpfchen, welche an der Materialbahn anhaften könnten und somit Fluidrückstände bilden, abfließen lassen zu können.

EP 1 674 535 A1 betrifft selbstreinigende Oberflächen mit verbesserter mechanischer Stabilität und ein Verfahren zu deren Herstellung. Dieses Ziel wird dadurch erreicht, dass selbstreinigende, hydrophobe, strukturierte Oberflächen hergestellt werden, die auf ihrer Oberfläche fixierte Mischungen von Partikeln aufweisen, die strukturgebende Partikel, ausgewählt aus Halbmetall- oder Metalloxiden, Kieselsäuren und Metallpulvern, und Wachspartikel aufweist. Strukturierte Oberflächen, die durch solche Gemische von Partikeln strukturiert sind, zeichnen sich durch eine deutlich höhere mechanische Stabilität der Struktur aus und sind deshalb besonders gut zur Herstellung von selbstreinigenden Oberflächen geeignet, die höheren mechanischen Belastungen ausgesetzt werden, wie beispielsweise die Oberflächen von Zeltplanen, Markisen, Gewächshauselementen, Wintergärten oder LKW-Planen. Jedoch machen die Wachspartikel eine Verwendung bei Flusensieben ungeeignet, da die Wachspartikel bei einer Aufbringung die vergleichsweise feinen Maschen zusetzen würden.

EP 0 825 230 A1 betrifft eine aushärtbare Polymethylsilsesquioxan-Verbindung, die Polymethylsilsesquioxan verwendet, das aus kostengünstigen Präkursoren gewonnen wird und eine harte, kratzfeste, höchst korrosionsbeständige, wasserabweisende und transparente gehärtete Dünnschicht bereitstellt. Die aushärtbare Polymethylsilsesquioxan-Verbindung umfasst ein Polymethylsilsesquioxan mit der allgemeinen Formel (CH3SiO3/2)n(CH3Si(OH)O2/2)m und einer vorbestimmten zahlengemittelten Molmasse, Mn, von 380 bis 2.000, wobei m und n positive Zahlen sind, welche die vorbestimmte Mn bereitstellen, mit der Bedingung, dass der Wert von m/(m + n) kleiner / gleich 0,152/(Mn x 10-3) + 0,10 und größer / gleich 0,034/(Mn x 10-3) und 10 bis 250 Gewichtsanteile Kolloid-Kieselerde beträgt. Diese Dünnschichten sind mit Schichtdicken von 6 µm auf flächige Träger aus Glas, Aluminium oder Stahl aufgebracht worden und zeigen einen Kontaktwinkel gegenüber Wasser von ca. 120°.

US 2008/0276656 A betrifft einen Waschtrockner vom Trommeltyp, welcher einen Wassertank, eine drehbare Trommel, die drehbar in dem Wassertank bereitgestellt ist, einen Entfeuchtungs-Wärmetauscher zum Entfeuchten von aus dem Inneren der Trommel eingelassener Luft, eine Heizeinheit zum Erwärmen der durch den Entfeuchtungs-Wärmetauscher entfeuchteten Luft sowie ein Gebläse zum Einbringen der Luft in der Trommel in den Entfeuchtungs-Wärmetauscher und zum Transportieren der durch die Heizeinheit erwärmten Luft in die Trommel aufweist. Ein Filter ist in einem saugseitigen Kanal zwischen der Trommel und dem Gebläse und an einer stromaufwärts gelegenen Seite eines Luftstroms, der in einem Trockenprozess von dem Gebläse erzeugt wird, angeordnet. Der Filter ist so angeordnet, dass er von Wasser durchtränkt wird, das in einem Wasch- oder Spülprozess in den Wassertank eingeleitet wird. In einer Ausführungsform weist der Waschtrockner ferner eine Reinigungseinheit zum Erzeugen eines Stroms des Wassers und dadurch einer Entfernung von Fremdkörpern, die sich an der Filtereinheit angehaftet haben, auf. Als die Drähte, die den Filter bilden, sind außer Metalldrähten Kunstharzdrähte und dergleichen denkbar; jedoch werden Metalldrähte bevorzugt, da Metalldrähte glatte Oberflächen aufweisen und keine Flusen, Fadenstücke und dergleichen anziehen. Ein Fixieren der Kreuzungen von Maschen der Drähte, z.B. mittels Kunstharzbeschichtens eines netzförmig gewebten Metallgarns, verhindert ein Auftreten von Problemen wie etwa einer Veränderung der Öffnungsgröße von Maschen, welche durch zwischen den über Kreuz liegenden Drähten hängen gebliebene Fremdkörper, ein Verschieben der Kreuzungen oder dergleichen verursacht werden. Eine hydrophobe Beschichtung wird nicht offenbart, da die Metalldrähte bereits als ausreichend glatt angesehen werden.

Es ist die Aufgabe der vorliegenden Erfindung, eine kostengünstige und einfach umsetzbare Möglichkeit zur einfacheren Reinigung von Hausgerätssieben, insbesondere Flusensieben, bereitzustellen. Insbesondere sollen möglichst günstige Rahmenbedingungen für eine Abreinigung eines Flusensiebs geschaffen werden, welches in der Prozessluftführung eines Wäschetrocknungsgeräts eingesetzt ist.

Diese Aufgabe wird mittels eines Hausgerätesiebs, eines Hausgeräts mit einem solchen Sieb und mittels eines Verfahrens zum Herstellen eines solchen Siebs nach dem jeweiligen unabhängigen Anspruch gelöst. Bevorzugte Ausführungsformen sind insbesondere den abhängigen Ansprüchen entnehmbar.

Das Hausgerätesieb weist ein Siebgrundmaterial oder Siebbasismaterial mit einer hydrophoben Beschichtung zum Heraussieben von Körpern, insbesondere Flusen, aus einem Prozesswasserkanal oder einem Prozessluftkanal, auf, wobei das Siebgrundmaterial aus einem Material besteht, das bei Temperaturen von 160 °C oder mehr beständig ist. Dadurch kann im Vergleich zu einem herkömmlichen Kunststoffmaterial die Beschichtungszeit verlängert werden, wodurch bereits die Anhaftkräfte von Fremdkörpern am Siebgewebe des Siebs abgesenkt werden können.

Bevorzugt ist das Siebgrundmaterial beständig bei Temperaturen von mehr als 200°C, insbesondere beständig bei Temperaturen von mehr als 300°C. Das Siebgrundmaterial kann dabei vorzugsweise bei einer Temperatureinwirkung mit einer Dauer von mehr als 10, insbesondere mehr als 45 Minuten, insbesondere von 90 oder mehr Minuten hochtemperaturbeständig sein. Das hochtemperaturbeständige Material ist besonders bevorzugt beständig bei Temperaturen von mehr als 200°C bei einer solchen Temperatureinwirkung mit einer Dauer von 90 oder mehr Minuten, um eine besonders gut geeignete hydrophobe Beschichtung zu erzielen.

Insbesondere kann das Siebgrundmaterial mit der hydrophoben Beschichtung für eine Dauer zwischen 90 Minuten und 120 Minuten bei einer Temperatur in einem Bereich von 200 °C bis 300 °C wärmebehandelt werden.

Das Siebgrundmaterial besteht bevorzugt aus Metall oder weist Metall auf. Metallsiebe lassen sich einfach und preiswert herstellen und nachbearbeiten. Für den Einsatz in einer feuchten Umgebung wie in einem Wäschetrockner oder einer Waschmaschine besteht das Siebgrundmaterial bevorzugt aus korrosionsfestem Material, insbesondere aus einem gegen Laugen- oder Wassereinwirkung korrosionsfesten Material. Vorteilhaft ist als das Siebgrundmaterial insbesondere Edelstahl oder Aluminium, welche temperaturbeständig sind und sich einfach mit geeigneten Beschichtungsmaterialien hydrophob beschichten lassen.

Die hydrophobe Beschichtung auf oder an dem Siebgrundmaterial ist bevorzugt so gewählt, dass sie eine Oberflächenenergie kleiner 35 mN / m bewirkt, insbesondere eine Oberflächenenergie kleiner 28 mN / m bewirkt. Dadurch wird eine besonders gute Verhinderung einer Haftung von Flusen o. ä. am Sieb verhindert. Die hydrophobe Beschichtung ist vorteilhaft mit einer Stärke von 1 bis 10 µm auf oder an dem Siebgrundmaterial ausgebildet, insbesondere mit einer Stärke von 2 bis 5 µm auf oder an dem Siebgrundmaterial ausgebildet. Dadurch wird eine Formgebung des Siebgrundmaterials nicht wesentlich behindert, und die Beschichtung braucht bei der Auslegung des Siebs nicht weiter berücksichtigt zu werden, was die Herstellung stark vereinfacht. Bevorzugt wird, wenn die hydrophobe Beschichtung als ein Nanolack und / oder einen Lotuseffekt bewirkend auf oder an dem Siebgrundmaterial ausgebildet ist. Bei dem Lotuseffekt wird ein Kontaktwinkel zu Wasser von ca. 160° oder mehr angenommen. Der Nanolack ist einfach auf das Grundmaterial aufbringbar und gut aushärtbar. Der Nanolack kann beispielsweise als ein Klarlack ausgestaltet sein, der in Nanotechnologie mit Keramikpartikeln versetzt worden ist. Das Siebgrundmaterial mit der Beschichtung ist bevorzugt als ein Gewebe oder Gelege angeordnet.

Es ist eine zur einfachen und preiswerten Herstellung mögliche Ausgestaltung, dass das Siebgrundmaterial eine zumindest bezüglich einer Benetzung nicht-strukturierte Oberfläche aufweist, insbesondere keine eingearbeitete Struktur.

Das Hausgerät weist ein darin angeordnetes Sieb mit einer solchen Ausgestaltung auf. Das Hausgerät ist insbesondere als ein Wäschebehandlungsgerät, wie ein Wäschetrockner, ein Waschtrockner oder eine Waschmaschine ausgestaltet, wobei das Sieb vorzugsweise als Flusensieb in einem Prozesswasserkanal oder in einem Prozessluftkanal angeordnet ist. Dabei wird eine Verwendung des Flusensiebs in einem kombinierten Prozesswasser- und in Prozessluftkanal eines Waschtrockners nicht bevorzugt, da das Sieb für eine effektive Rückhaltung von Flusen aus der Prozessluft zu fein für einen Prozesswasserstrom ist und diesem stauen würde und umgekehrt ein Flusensieb, dass für einen Prozesswasserkanal optimiert ist, zur Flusenentfernung in einem Prozessluftkanal zu grob ist. Jedoch ist das Hausgerät nicht darauf beschränkt und kann beispielsweise als ein Staubsauger, eine Geschirrspülmaschine, eine Esse usw. ausgestaltet sein.

Das Hausgerät weist vorzugsweise eine Siebreinigungsvorrichtung zum Benetzen des Siebs mit einer Reinigungsflüssigkeit, insbesondere Wasser, zu dessen Reinigung auf. Das Sieb ist in diesem Fall insbesondere als Flusensieb im Prozessluftkanal für einen Wäschetrockner oder Waschtrockner vorgesehen. Mittels der Siebreinigungsvorrichtung kann das Sieb von anhaftenden Flusen gereinigt werden, wobei die Siebreinigungsvorrichtung eine Reinigungsflüssigkeit derart über das Flusensieb spült oder sprüht, dass die anhaftenden Flusen von einer Sieboberfläche des Siebs weggespült werden. Im Falle eines beispielhaften Wäschetrockners oder Waschtrockners kann als Reinigungsflüssigkeit insbesondere zuvor aus der Wäsche durch den Trocknungsprozess entzogene Feuchtigkeit, welche kondensiert und für den Reinigungsprozess gesammelt wird, verwendet werden. Es kann aber auch Frischwasser als Reinigungsflüssigkeit verwendet werden.

Bei dem Verfahren wird das Sieb aus einem Siebgrundmaterial hergestellt, welches mit einer hydrophoben Beschichtung ausgerüstet wird, wobei als das Siebgrundmaterial ein bei mindestens 160 °C dauerhaft temperaturbeständiges Material verwendet wird.

Für das Sieb bzw. das Siebgewebe wird als Material somit anstelle eines Kunststoffs, welcher eine Fixierung der hydrophoben Beschichtung nur bei niedriger Temperatur von ca. 160°C und kurzer Dauer von ca. 1,5 Minuten ermöglicht, ein Siebgrundmaterial verwendet, welches den Einsatz höherer Temperaturen und / oder längerer Dauer der hohen Temperatureinwirkungen zulässt. Besonders bevorzugt werden zwar Metalle, insbesondere Edelstahl, jedoch können auch andere Materialien eingesetzt werden, welche diesen Bedingungen genügen. Insbesondere metallische Werkstoffe ermöglichen für die Ausstattung mit einer hydrophoben Beschichtung Einbrenntemperaturen und Einbrennzeiten, welche deutlich über denen eines einfachen Kunststoffs liegen.

Beim Einbrennen von so genannten "Easy-to-Clean-Beschichtungen" auf beispielsweise einem Edelstahlgewebe können bei Temperaturen zwischen 200°C und 300°C, bevorzugt bei ca. 250 °C, bei Einbrennzeiten zwischen 90 und 100 Minuten Oberflächenenergien erzeugt werden, welche deutlich unter denen liegen, welche auf insbesondere einfachen Kunststoffgeweben erreicht werden können. Oberflächenenergien können insbesondere auf Edelstahlgeweben mit Werten < 28 mN / m erreicht werden, was eine Abreinigung von Flusen bzw. Körpern von dem Sieb deutlich vereinfacht.

Ein weiterer Vorteil besteht in einer durch diese zeitlichen Bedingungen und Temperaturbedingungen besseren Aushärtung, wodurch die Beständigkeit der Beschichtung gegen Temperatur- und Feuchtigkeitseinflüsse weiter verbessert wird.

Durch Verwendung von Edelstahlgeweben für Flusensiebe können die hydrophoben Eigenschaften der Sieboberfläche und die Abreinigungswirkung einer Reinigungseinrichtung deutlich verbessert werden.

In den folgenden Figuren wird die Erfindung anhand eines Ausführungsbeispiels schematisch genauer beschrieben. Dabei sind zur besseren Übersichtlichkeit gleiche oder gleichwirkende Elemente mit gleichen Bezugszeichen versehen.
- FIG 1: zeigt schematisch Komponenten eines Wäschetrockners mit einem Flusensieb, welches eine bevorzugte hochtemperaturbeständige Ausgestaltung aufweist und
- FIG 2: zeigt schematisch Herstellungsschritte zur Herstellung eines solchen Siebes.

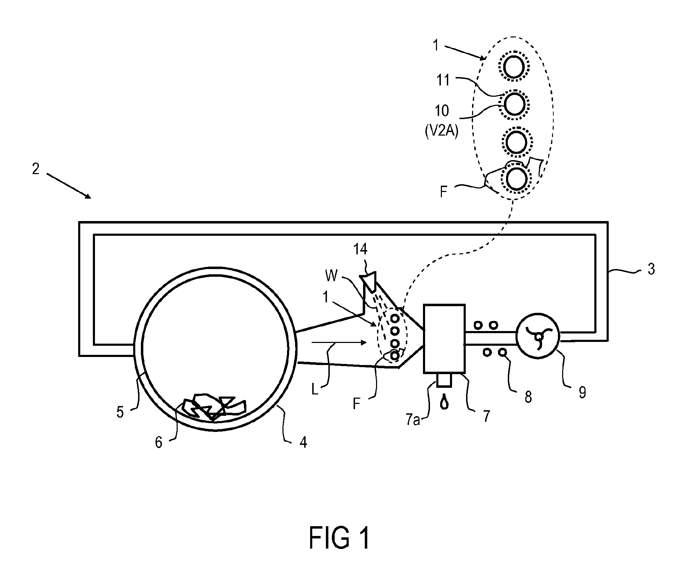

FIG 1 zeigt beispielhaft ein Sieb 1, welches in einem Hausgerät 2 in Form eines Wäschetrockners eingesetzt ist. Das Sieb 1 ist dabei in einem Prozessluftkanal 3 eingesetzt, welcher von einer Wäschetrommel 4 wegführt. Die Wäschetrommel 5 dient zum Trocknen von darin eingebrachter Wäsche 6. Beim Trocknen der Wäsche 6 gibt diese neben Feuchtigkeit auch Körper F wie Flusen in die Prozessluft L ab. Wie dargestellt, werden die Körper F durch das Sieb 1 aus der Prozessluft L herausgesiebt und lagern sich daran ab, bevor die Prozessluft L an einen Kondensator 7 gelangt. Der Kondensator 7 dient dazu, die von der Prozessluft L aufgenommene Luftfeuchtigkeit zu kondensieren und über einen Kondensatorauslass 7a abzuführen. Ohne das Sieb könnten sich Flusen F am Kondensator 7 ablagern und dadurch dessen Wirkungsgrad verschlechtern. In für sich bekannter Art und Weise kann die aus dem Kondensatorauslass 7a abgeführte Feuchtigkeit in die Umgebungsluft abgegeben werden, in einem Kondensatbehälter gesammelt werden oder über einen Abfluss des Hausgeräts 2 abgeführt werden. Die durch den Kondensator 7 hindurch geströmte Prozessluft L wird nachfolgend durch eine Heizeinrichtung 8 geführt, um sie aufzuheizen. Außerdem ist in dem Prozessluftkanal 3 ein Gebläse 9 vorhanden, welches die aufgeheizte Prozessluft wieder in das Trommelgehäuse 4 führt.

Ferner weist der Wäschetrockner 2 eine Siebreinigungsvorrichtung 14 zum Benetzen des Siebs 1 mit einer Reinigungsflüssigkeit, hier: Wasser W aus dem Kondensatbehälter oder Frischwasser, zu dessen Reinigung auf. Von der Siebreinigungsvorrichtung 14 ist lediglich ein Sprühkopf gezeigt, über den Wasser mit Druck auf das Sieb 1 gesprüht wird. Je hydrophober die Oberfläche des Siebs 1 ist, desto einfacher lassen sich Flusen usw. vom Sieb abspülen und durch eine Abwasserleitung abführen. Die Siebreinigungsvorrichtung 14 weist den Vorteil auf, dass ein Nutzer das Sieb 1 nicht mehr von Hand zu reinigen braucht.

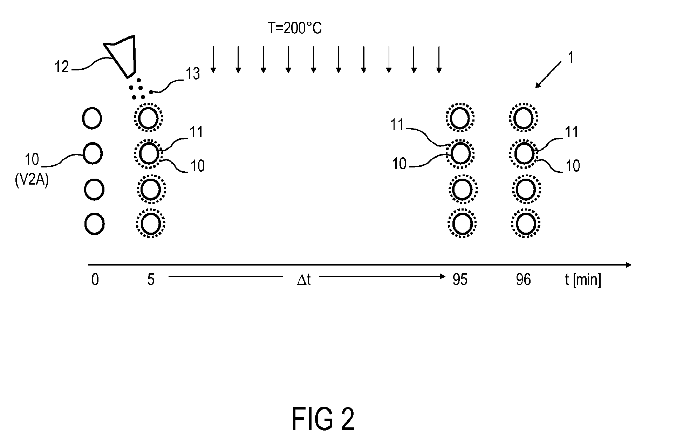

Wie anhand FIG 1 und FIG 2 skizziert, besteht das Sieb 1 als ein Flusensieb aus einem Geflecht, Gewirk oder Gelege aus einem Siebgrundmaterial 10, welches von einer hydrophoben Beschichtung 11 umgeben ist. Als das Siebgrundmaterial 10 wird ein hochtemperaturbeständiges Material, beispielsweise Edelstahl V2A, bevorzugt.

FIG 2 zeigt eine beispielhafte Abfolge von Herstellungsschritten für ein solches Sieb 1. Zu einem ersten Zeitpunkt der fortlaufend dargestellten Zeit t beginnt der Herstellungsprozess mit dem Bereitstellen des Siebgrundmaterials 10. Nachfolgend wird das Siebgrundmaterial 10 mittels einer Beschichtungsvorrichtung 12 mit Schichtmaterial 13 für eine hydrophobe Beschichtung 11 beschichtet. In diesem Ausführungsbeispiel wird das Siebgrundmaterial 10 mit einer Beschichtung 11 in Form eines Nanolacks versehen, bei welchem Nano-Keramikpartikel unter eine Lackgrundmasse gemischt werden und nach dem Auftragen auf das Siebgrundmaterial durch die Temperatureinwirkung aushärten. Solche Nanolacke sind besonders resistent gegen nicht nur mechanische Einwirkungen, sondern auch gegen Reinigungsmittel, welche beispielsweise zum Wäschereinigen eingesetzt werden und mit der Prozessluft oder einem sonstigen Prozessmedium mitgeführt werden.

Nach hier einer Zeitdauer von fünf Minuten wird das derart mit der hydrophoben Beschichtung 11 vorbereitete Siebgrundmaterial 10 erhitzt. Eine bevorzugte Temperatur T beträgt 200°C oder mehr und wirkt über eine Zeitdauer Δt von beispielsweise 90 Minuten auf diese Anordnung ein. Danach wird zu einem späteren Zeitpunkt das derart fertig gestellte Sieb 1 mit dem Siebgrundmaterial 10 und der dieses umgebenden hydrophoben Beschichtung 11 mit einer Dicke von ca. 2 bis 5 µm entnommen und ggf. für eine Weiterverarbeitung in einem Hausgerät bereitgestellt.

Selbstverständlich ist die vorliegende Erfindung nicht auf das gezeigte Ausführungsbeispiel beschränkt.

So kann eine Vielzahl von Variationen gegenüber der beschriebenen Ausgestaltung und Verfahrensweise zur Herstellung eines solchen Siebes 1 eingesetzt werden. Beispielsweise kann die Temperatur T auch in einem niedrigeren oder höheren Temperaturbereich eingesetzt werden, je nachdem, welches Material als Siebgrundmaterial 10 verwendet wird. Selbiges gilt auch für die Zeitdauer Δt, über welche die Temperatur T auf die Anordnung einwirkt.

Letztendlich kann ein beliebiges Material verwendet werden, welches entsprechend hochtemperaturbeständig ist und eine Beschichtung mit einer geeigneten hydrophoben Beschichtung ermöglicht. Neben Metallen, insbesondere korrosionsfestem Metall wie Edelstahl oder Aluminium, können auch andersartige Werkstoffe mit nichtmetallischer Konsistenz oder Werkstoffgemische eingesetzt werden.

Die Siebreinigungsvorrichtung kann statt eines Sprühkopfs auch eine Wassereinleitungseinheit aufweisen, mittels der Wasser von oben über das Sieb laufen gelassen wird.

Vorteilhaft können auch hydrophobe Beschichtungen eingesetzt werden, welche den so genannten Lotuseffekt bieten.

Neben dem Einsatz eines solchen Siebes in einem Wäschetrockner als dem Hausgerät ist der Einsatz derartiger Siebe auch in anderen Hausgeräten möglich. Beispielsweise kann ein solches Sieb in dem Prozessluftkanal eines Waschtrockners als kombinierter Waschmaschine mit Wäschetrockner oder in einem Staubsauger eingesetzt werden. Auch der Einsatz solcher Siebe in einem Prozessmediumkanal, durch welchen ein flüssiges Prozessmedium geleitet wird, wie bei einem Geschirrspüler oder einer Waschmaschine bzw. einem Waschtrockner, ist möglich.

Die beispielhafte Abfolge von Komponenten des Wäschetrockners als Hausgerät kann auch in anderer Reihenfolge erfolgen. Insbesondere braucht ein solches Sieb nicht nur im Prozessluftkanal 3 direkt hinter dem Trommelgehäuse 4 angeordnet zu werden, sondern kann auch an beliebig anderer Stelle in dem Prozessluftkanal 3 angeordnet werden. Auch ist der Einsatz eines solchen Siebes in einem andersartig gestalteten Prozessluftkanal möglich, beispielsweise in einem Luftzufuhrkanal oder in einem Luftabführkanal, welche zur Außenseite des Hausgeräts führen und nicht als geschlossener Prozessluft-Kreislauf ausgestaltet sind.

### Bezugszeichenliste

- 1: Sieb
- 2: Hausgerät
- 3: Prozessluftkanal
- 4: Trommelgehäuse
- 5: Wäschetrommel
- 6: Wäsche
- 7: Kondensator
- 7a: Kondensatorauslass
- 8: Heizeinrichtung
- 9: Gebläse
- 10: Siebgrundmaterial
- 11: hydrophobe Beschichtung
- 12: Beschichtungsvorrichtung
- 13: Beschichtungsmaterial für hydrophobe Beschichtung
- 14: Siebreinigungsvorrichtung
- F: Körper, insbesondere Flusen
- L: Prozessluft
- t: Zeit
- T: Temperatur
- V2A: Edelstahl
- W: Wasser

## Patentansprüche

1. Hausgerätesieb zur Verwendung in einem Wäschebehandlungsgerät, wobei das Hausgerätesieb ein Siebgrundmaterial (10) mit einer hydrophoben Beschichtung (11) zum Heraussieben von Körpern (F), insbesondere Flusen, aus einem Prozesswasserkanal oder einem Prozessluftkanal (3) aufweist,
wobei das Siebgrundmaterial (10) aus einem Material besteht, das bei Temperaturen von 160 °C oder mehr beständig ist,
**dadurch gekennzeichnet, dass**
die hydrophobe Beschichtung (11) auf oder an dem Siebgrundmaterial (10) eine Oberflächenenergie kleiner 35 mN/m bewirkt, insbesondere eine Oberflächenenergie kleiner 28 mN/m bewirkt.

2. Sieb (1) nach Anspruch 1, **dadurch gekennzeichnet, dass** die hydrophobe Beschichtung (11) mit einer Stärke von 1 bis 10 µm auf oder an dem Siebgrundmaterial (10) ausgebildet ist, insbesondere mit einer Stärke von 2 bis 5 µm auf oder an dem Siebgrundmaterial (10) ausgebildet ist.

3. Sieb (1) nach einem der vorhergehenden Ansprüche, **dadurch gekennzeichnet, dass** die hydrophobe Beschichtung (11) als ein Nanolack und / oder eine einen Lotuseffekt bewirkende Beschichtung auf oder an dem Siebgrundmaterial (10) ausgebildet ist.

4. Sieb (1) nach einem der vorhergehenden Ansprüche, **dadurch gekennzeichnet, dass** das Siebgrundmaterial (10) bei Temperaturen von mehr als 200°C beständig ist, insbesondere bei Temperaturen von mehr als 240 °C beständig ist, speziell bei Temperaturen von mehr als 300°C beständig ist.

5. Sieb (1) nach einem der vorhergehenden Ansprüche, **dadurch gekennzeichnet, dass** das Siebgrundmaterial (10) hochtemperaturbeständig ist bei Temperatureinwirkung mit einer Dauer von mehr als 45 Minuten, insbesondere temperaturbeständig ist bei Temperatureinwirkung mit einer Dauer von 90 oder mehr Minuten.

6. Sieb (1) nach einem der vorhergehenden Ansprüche, **dadurch gekennzeichnet, dass** das Siebgrundmaterial (10) aus Metall besteht oder Metall aufweist.

7. Sieb (1) nach Anspruch 6, **dadurch gekennzeichnet, dass** das Siebgrundmaterial (10) aus korrosionsfestem Material besteht, insbesondere aus gegen Laugen- oder Wassereinwirkung korrosionsfestem Material besteht.

8. Sieb (1) nach Anspruch 6 oder 7, **dadurch gekennzeichnet, dass** das Siebgrundmaterial (10) aus Edelstahl (V2A) besteht oder Edelstahl (V2A) aufweist.

9. Sieb (1) nach Anspruch 6 oder 6, **dadurch gekennzeichnet, dass** das Siebgrundmaterial (10) aus Aluminium besteht oder Aluminium aufweist.

10. Sieb (1) nach einem der vorhergehenden Ansprüche, **dadurch gekennzeichnet, dass** das Siebgrundmaterial (10) als ein Gewebe oder Gelege angeordnet ist.

11. Hausgerät (2), **gekennzeichnet durch** ein darin angeordnetes Sieb (1) nach einem der vorhergehenden Ansprüche.

12. Hausgerät (2) nach Anspruch 11, welches als Wäschebehandlungsgerät ausgestaltet ist, insbesondere als Wäschetrockner, Waschtrockner oder Waschmaschine, **dadurch gekennzeichnet, dass** das das Sieb (1) als Flusensieb in einem Prozessluftkanal (3) des Hausgeräts (2) angeordnet ist und dass das Hausgerät (2) ferner eine Siebreinigungsvorrichtung (14) zum Benetzen des Siebs (1) mit einer Reinigungsflüssigkeit, insbesondere Wasser (W), zu dessen Reinigung aufweist.

13. Verfahren zum Herstellen eines Siebs (1) nach einem vorstehenden Anspruch, bei dem das Sieb (1) aus einem Siebgrundmaterial (10) hergestellt wird, welches mit einer hydrophoben Beschichtung (11) ausgerüstet wird,
wobei als das Siebgrundmaterial (1) ein Material verwendet wird, das bei Temperaturen von 160 °C oder mehr beständig ist,
**dadurch gekennzeichnet, dass**
die hydrophobe Beschichtung (11) auf oder an dem Siebgrundmaterial (10) eine Oberflächenenergie kleiner 35 mN/m bewirkt, insbesondere eine Oberflächenenergie kleiner 28 mN/m bewirkt, und dass
die hydrophobe Beschichtung (11) bei einer Einbrenndauer von 90 min oder länger und bei einer Einbrenntemperatur von 200 °C oder mehr in das Siebgrundmaterial (1) eingebrannt wird.
